# EUROPEAN PATENT APPLICATION

(11) **EP 0 667 549 A2**
(43) Date of publication of application: **16.08.1995**
(21) Application number: 95300888.5
(22) Date of filing: 13.02.1995
(51) Int. Cl.: G02B 26/10, G02B 17/06, G02B 7/182

(54) **Opto-mechanical system**

(30) Priority: 14.02.1994 IL 10864694
(71) Applicant: THE STATE OF ISRAEL, MINISTRY OF DEFENSE, RAFAEL ARMAMENT DEVELOPMENT AUTHORITY, Haifa 31 021 (IL)
(72) Inventor: Iddan, Gavriel J., Haifa 34602 (IL)
(74) Representative: Kelvie, George Thomas

(57) **Abstract**

A support for a scanner (14) is disclosed wherein the support is formed of a toroidal lens (30). The central hole of the toroidal lens can have a mechanical element attached therein. The mechanical element can be stationary or it can translate, vibrate or rotate. In one embodiment, the optical system is a cassegrain optical system which includes a toroidal secondary lens and a scanner. The scanner preferably is located within the hole of the toroid and is fixedly attached thereto.

## Description

### FIELD OF THE INVENTION

The present invention relates to lenses which act as structural members in general and to such lenses within cassegrain optical systems in particular.

### BACKGROUND OF THE INVENTION

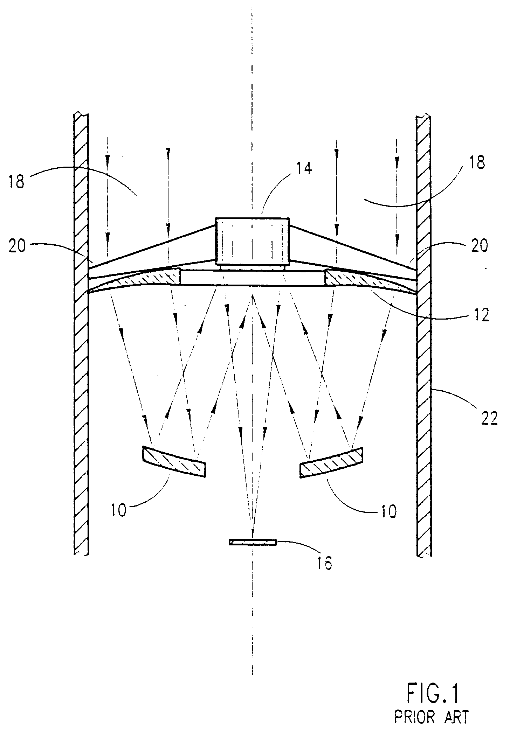

Cassegrain optical systems, wherein the optical path is folded in order to make the system more compact, are known in the art. Fig. 1, to which reference is now made, illustrates one such cassegrain optical system.

The system includes two primary, concave mirrors 10, a secondary lens 12, a scanner 14 and a detector 16. Parallel light beams 18 are focussed by the lens 12 onto a focal plane at which detector 16 is located. Mirrors 10 bend the focussed beams toward scanner 14, located behind the lens 12, which reflects the beams toward detector 16 while scanning them, causing them to sweep across detector 16.

The scanner 14 typically is much smaller than the lens 12 but has to be located concentric with and behind the center of the lens. Therefore, the scanner 14 is held in place with a few, typically three, thin metal legs 20 standing on a housing 22 which also holds the lens 12 in place.

Unfortunately, the legs 20 partially obstruct the light path of parallel beams 18 and, as a result, reduce the amount of light reaching the detector 16. Furthermore, since the legs 20 are made of metal and not of glass, the legs 20 cause off-axis reflection or "stray light". The space required for the legs 20 and the spinner 14 add length to the optical system.

### SUMMARY OF THE PRESENT INVENTION

It is therefore an object of the present invention to provide an optical system which improves upon the limitations of the prior art.

There is therefore provided, in accordance with a preferred embodiment of the present invention, a cassegrain optical system including a toroidal secondary lens and a scanner. The scanner preferably is located within the hole of the toroid and fixedly attached thereto.

There is also provided, in accordance with a preferred embodiment of the present invention, a toroidal lens within whose central hole a mechanical element is attached. The mechanical element can be stationary or it can translate, vibrate or rotate.

### BRIEF DESCRIPTION OF THE DRAWINGS

The present invention will be understood and appreciated more fully from the following detailed description taken in conjunction with the drawings in which:
Fig. 1 is a schematic illustration of a prior art cassegrain optical system;
Fig. 2 is a schematic illustration of a toroidal lens supporting a mechanical element, constructed and operative in accordance with the present invention and provided as an example as part of a cassegrain optical system; and
Fig. 3 is a schematic illustration of the toroidal lens of Fig. 2.

### DETAILED DESCRIPTION OF A PREFERRED EMBODIMENT

Applicant has realized that optical elements, such as lenses and mirrors, have structural as well as optical properties. Therefore, they can be utilized to support mechanical elements, including elements which rotate, vibrate or translate.

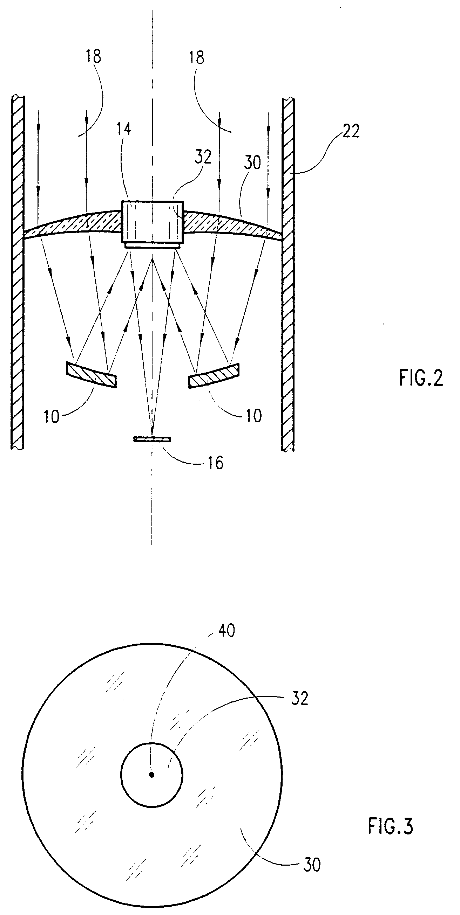

For example, it is noted that in the prior art system of Fig. 1, the center of lens 12 behind which the scanner 14 operates, does not actively affect the focussed beams. Therefore, in accordance with the present invention and as shown in Figs. 2 and 3 to which reference is now made, the secondary lens of the cassegrain optical system of Fig. 1 is formed of a toroidal lens 30 having a central hole 32 of the size of the area of the scanner 14. The remaining elements are similar to those of the prior art and therefore, have similar reference numerals.

In the present invention, the scanner 14 is located within central hole 32 and is attached to lens 30 via a suitable glue, such as a structural glue which corrects for the thermal mismatch between the glass and the metal housing of the scanner 14. A suitable glue is the RTV glue commercially available from General Electric.

Since the present invention has none of the legs 20 of the prior art, there is no stray light nor any obscuration caused by them.

It is noted that, in the present invention, the scanning surface of scanner 14 is in front of the lens 12. Therefore, the focal length of the lens 12 has to be selected to ensure proper operation of the system of Fig. 2.

It is further noted that, since the hole 32 is concentric to a center 40 of the lens 30 and since the scanner 14 is placed into hole 32, the installation of the scanner 14 requires little calibration vis-a-vis the lens 30.

It will be appreciated by persons skilled in the art that the present invention is not limited to what has been particularly shown and described hereinabove. Rather the scope of the present invention is defined by the claims which follow:

## Claims

1. A cassegrain optical system comprising:
a toroidal lens having a central hole; and
a scanner,
wherein said scanner is located within said central hole and is fixedly attached thereto.

2. An optical system according to claim 1 and additionally comprising structural glue attaching said scanner to said lens.

3. A toroidal lens having a central hole within which a mechanical element is attachable.

4. A support for a scanner, the support formed of a toroidal lens.

5. The use of an optical element as a support for a stationary mechanical unit.

6. The use of an optical element as a support for a mechanical unit which has at least one moving part.
